(19) **Europäisches Patentamt**

**European Patent Office**

**Office européen des brevets**

(11) **EP 0 737 408 B1**

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(51) Int Cl.⁷: **H04Q 7/36**, H04H 3/00

(21) Anmeldenummer: **95903800.1**

(22) Anmeldetag: **15.12.1994**

(86) Internationale Anmeldenummer:
**PCT/EP1994/004156**

(87) Internationale Veröffentlichungsnummer:
**WO 1995/017798 (29.06.1995 Gazette 1995/27)**

(54) **STEUERUNGSEINRICHTUNG FÜR DIE FUNKVERSORGUNG IN EINEM ZELLULAREN, DIGITALEN MOBILKOMMUNIKATIONSSYSTEM**

CONTROL DEVICE FOR RADIO COVERAGE IN A CELLULAR DIGITAL MOBILE COMMUNICATION SYSTEM

CIRCUIT DE COMMANDE DE COUVERTURE RADIO DANS UN SYSTEME DE COMMUNICATION MOBILE, NUMERIQUE ET CELLULAIRE

(84) Benannte Vertragsstaaten:
**AT CH DE FR GB IE IT LI SE**

(30) Priorität: **21.12.1993 DE 4343765**

(43) Veröffentlichungstag der Anmeldung:
**16.10.1996 Patentblatt 1996/42**

(73) Patentinhaber: **DETECON DEUTSCHE TELEPOST CONSULTING GmbH 53175 Bonn (DE)**

(72) Erfinder:
- **SCHMIDT, Werner Boyle (IE)**
- **VARY, Peter D-52074 Aachen (DE)**
- **PAPEN, Wolfgang D-52072 Aachen (DE)**
- **ZÜRBES, Stefan D-52134 Herzogenrath (DE)**

(74) Vertreter: **Riebling, Peter, Dr.-Ing. et al Patentanwalt, Rennerle 10 88131 Lindau (DE)**

(56) Entgegenhaltungen:
**EP-A- 0 101 634     EP-A- 0 335 846**
**EP-A- 0 339 740     WO-A-93/12586**

- **VEHICULAR TECHNOLOGY SOCIETY 42ND VTS CONFERENCE. FRONTIERS OF TECHNOLOGY. FROM PIONEERS TO THE 21ST CENTURY, Bd. 2, 10.Mai 1992 - 13.Mai 1992 DENVER, CO, US, Seiten 637-640, XP 000339868 LEE ET AL. 'A New Microcell System in L.A.'**
- **FUNKSCHAU, Nr. 13, Juni 1982 MÜNCHEN DE, Seiten 51-54, BÜRK 'Auf gleicher Frequenz. Realisierung des Gleichwellenfunks'**

**Beschreibung**

Die vorliegende Erfindung betrifft eine Steuerungseinrichtung für die Funkversorgung eines zellularen, digitalen Mobilkommunikationssystems nach dem Oberbegriff des Patentanspruchs 1.

Die EP 0 335 846 A1 betrifft ein zellulares, digitales Mobilfunksystem, bei welchem die Mobilstationen von mehreren Feststationen vom Zellenrand her im Gleichwellenbetrieb mit dem selben Signal über Sektorantennen versorgt werden, wobei die auf dem Träger jeder Feststätion ausgesendeten Signale im Basisband identisch sind. Dabei besitzt die Basisstation mehrere Sende- und Empfangseinheiten, deren Betrieb von einer zentralen Einheit der Basisstation gesteuert wird.

In der DE-OS 41 41, 398 A1 ist ein Verfahren zur Verbesserung der Funkzellenausleuchtung bei einem zellularen Mobilfunksystem und eine Vorrichtung zur Ausübung des Verfahrens beschrieben. In dieser Schrift sind aber keine Hinweise gegeben, wie die Einrichtung zur Realisierung dieses Verfahrens beschaffen sein sollten.

Der vorliegenden Patentanmeldung liegt daher die Aufgabe zugrunde, die Struktur und Funktionen von Einrichtungen für die praktischen Umsetzung des Verfahrens zu entwickeln.

Die hier dargestellte Lösung zur Steuerung der in den Funkfeststationen installierten Sende- und Empfangseinrichtungen und zur Verarbeitung der von diesen kommenden Signale und zur Aufbereitung der an diese abgehenden Signale ist durch die kennzeichnenden Merkmale des Patentanspruches 1 gekennzeichnet.

Die Erfindung beruht also darauf, einen Zellcontroller zur Verbundoptimierung der Zellparameter vorzusehen, welche die durch das verwendete Fünkzellenausleuchtungsverfahren bedingten neuen Funktionen zur Signalverarbeitung und zur Steuerung der Funkeinrichtungen beinhaltet.

Wesentlich ist, daß die Steuerungseinrichtung so beschaffen ist, daß möglichst viele existierende Komponenten herkömmlicher Realisierungen weiter verwendet werden können.

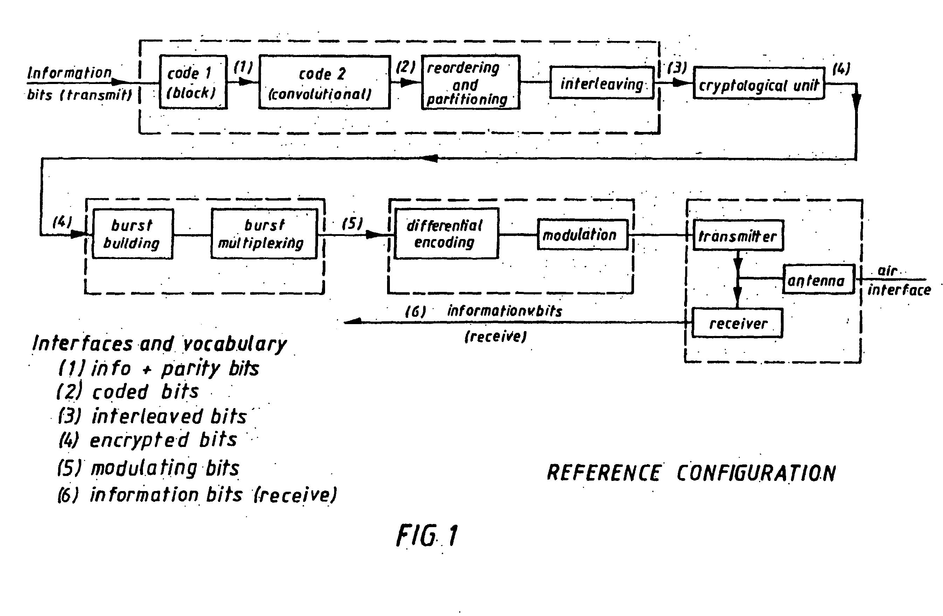

Die Einrichtungen und Funktionen werden nachfolgend am Beispiel des GSM-Standards für Mobilkommunikation beschrieben. Natürlich ist die hier beschriebene Steuerungseinrichtung nicht auf diesen Mobilkommunikations-Standard beschränkt, sondern lässt sich auf alle anderen zellularen, digitalen Mobilkommunikations-Standards übertragen. Die im GSM-Standard für die Funkübertragung definierten Funktionen sind in Figur 1 gezeigt, welche der GSM-Empfehlung 05.01 entnommen ist (ETSI-GSM Technical Specification GSM 05.01. Physical Layer on the Radio Path: General Description. European Telecommunications Standards Instiue, Februar 1992.)

Das Verfahren nach der DE-OS 41 41 398 A1 setzt voraus, daß eine Zelle nicht wie bisher durch eine Sende- und Empfangseinrichtung, sondern nunmehr von mehreren Seiten vom Rand aus mit demselben Signal im Gleichwellenbetrieb durch Richtantennen versorgt wird. Bei diesem Konzept mit Mehrfachversorgung können im Prinzip die gleichen Standorte wie bei herkömmlicher Funkversorgung genutzt werden. In jeder Feststation sind mehrere sich gegenseitig überlappende Sektorantennen angeordnet.

Nachfolgend werden die Einrichtungen und ihre Funktionen erläutert für den Fall, daß jede Zelle gleichzeitig von drei Feststationen durch Sektorantennen mit einem Öffnungswinkel von 120° versorgt wird, wobei sich die Sektorantennen benachbarter und sich gegenseitig teilweise überdeckender Zellen um jeweils 60° überlappen.

Die dargestellten Lösungen sind aber in gleicher Weise auch auf andere Fälle mit einer kleineren oder größeren Zahl von Feststationen pro Zelle sowie anderen Öffnungswinkeln und Überlappungsbereichen anwendbar.

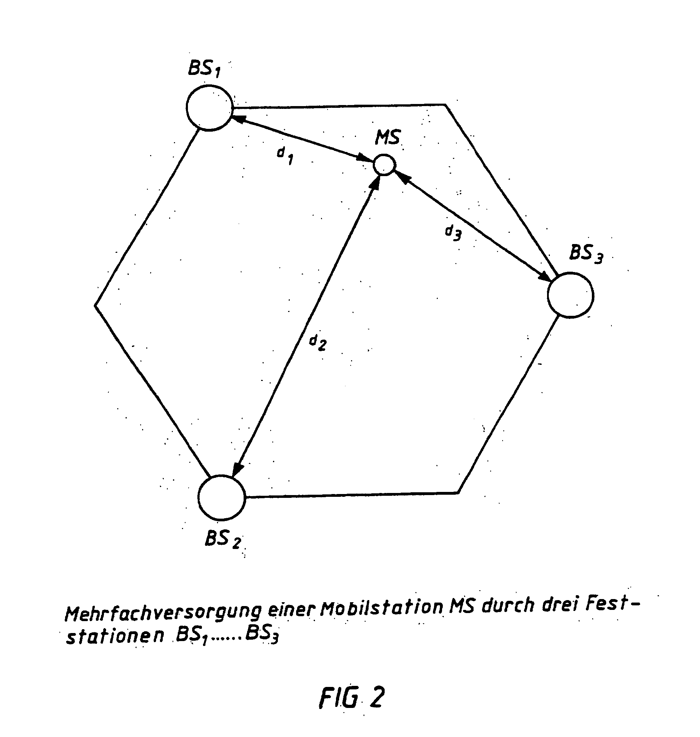

Figur 2 veranschaulicht die Mehrfachversorgung einer Mobilstation MS mit drei Feststationen $BS_1$.. $BS_3$ pro Zelle. Man erkennt, daß die Mobilstation MS hierbei über drei verschiedene Funkverbindungswege $d_1..d_3$ mit den drei Feststationen $BS_1..BS_3$ verbunden ist. Im Downlink, d.h. in der Funkrichtung von der Feststation zur Mobilstation, überlagern sich die Sendesignale der Feststationen $BS_i$ additiv am Ort der Mobilstation MS. Im Uplink, d.h. in der Funkrichtung von der Mobilstation zur Feststation, empfangen alle drei Feststationen BSi das Sendesignal der Mobilstation MS. Aufgrund der unterschiedlichen Verbindungswege mit den jeweiligen Abständen $d_1$ bis $d_3$ treten unterschiedliche Laufzeiten für die drei Pfade auf, die im wesentlichen proportional zu den jeweiligen Distanzen $d_1..d_3$ sind. Ebenso treten auf den drei Pfaden unterschiedliche Ausbreitungsdämpfungen auf, die in erster Näherung proportional zu $d_i$ sind, wobei den mittleren Ausbreitungskoeffizienten angibt.

Aufgrund dieser mehrfachen Ausbreitungspfade mit ihren unter Umständen wesentlich unterschiedlichen Parametern ergeben sich gegenüber einer konventionellen Netzarchitektur mit Einfachversorgung einige wesentliche Änderungen für die Implementierung. Dies betrifft z.B. den Ausgleich der verschiedenen Laufzeiten und die Leistungsregelung im Downlink und Uplink.

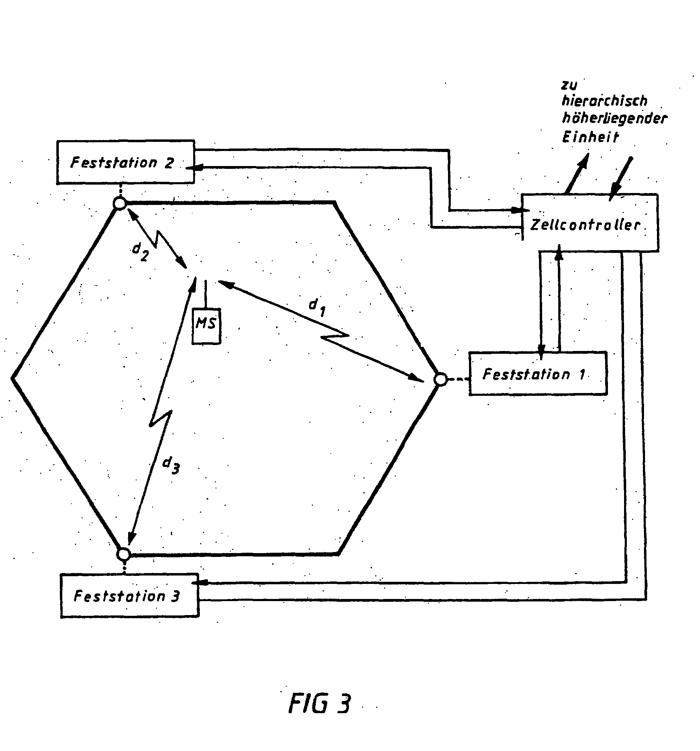

Da diese Größen für jede Zelle und jede Mobilstation individuell zu bestimmen sind, führt die neue Systemkomponente Zellcontroller die nötige Verbundoptimierung der Zellparameter durch, die in den nächsten Abschnitten beschrieben werden. Desweiteren ist der Zellcontroller für die Kombination der verschiedenen Nutzsignale im Uplink und die Verteilung der Signale im Downlink zuständig. Figur 3 verdeutlicht das Zusammenwirken von Zellcontroller und Feststationen am Beispiel von drei Feststationen pro Zeile.

Im folgenden wird die Erfindung anhand von lediglich einen Ausführungsweg darstellenden Zeichnungen näher erläutert. Hiebei gehen aus den Zeichnungen und ihrer Beschreibung weitere erfindungswesentliche Merkmale und Vorteile der Erfindung hervor.

Dabei zeigen:

Figur 1: Überblick über den Physical Layer im GSM-System;

Figur 2: Mehrfachversorgung einer Mobilstation MS durch drei Feststationen $BS_1$ bis $BS_3$;

Figur 3: das Zusammenwirken von Zellcontroller und Feststationen am Beispiel von drei Feststationen pro Zelle;

Figur 4: ein Übersichts-Blockdiagramm zur Struktur und den Einrichtungen der Erfindung;

Figur 5: eine detaillierte Darstellung der im Gesamtsystem verwendeten Funktionsblöcke am Beispiel von drei Feststationen pro Zelle;

Figur 6: die bevorzugte Plazierung der Master-Feststationen und deren Verbindung mit den Slave-Feststationen.

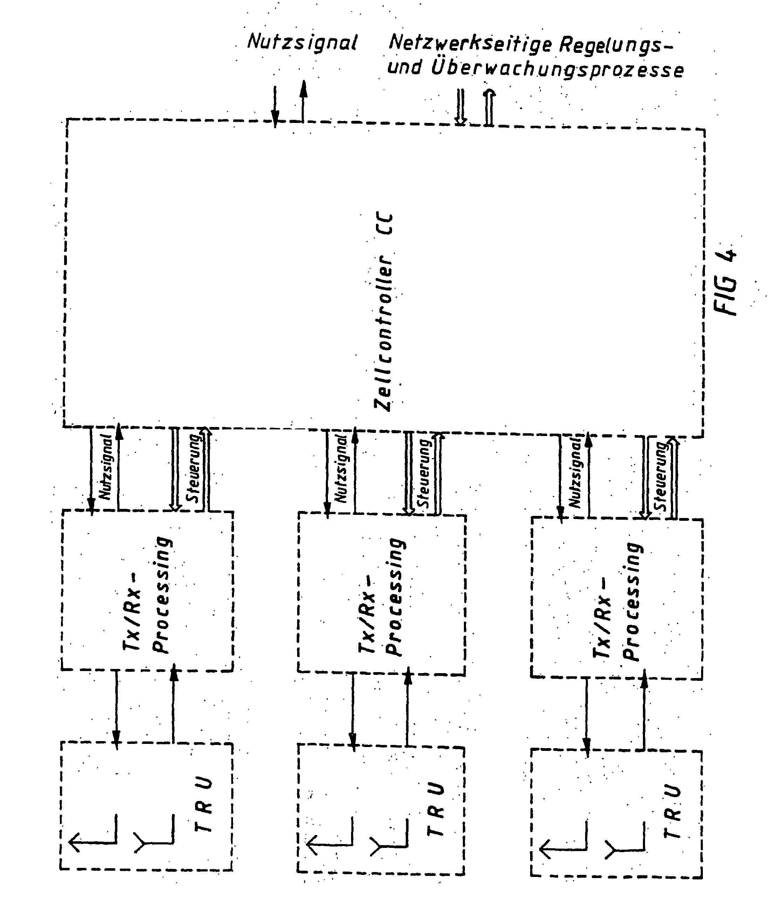

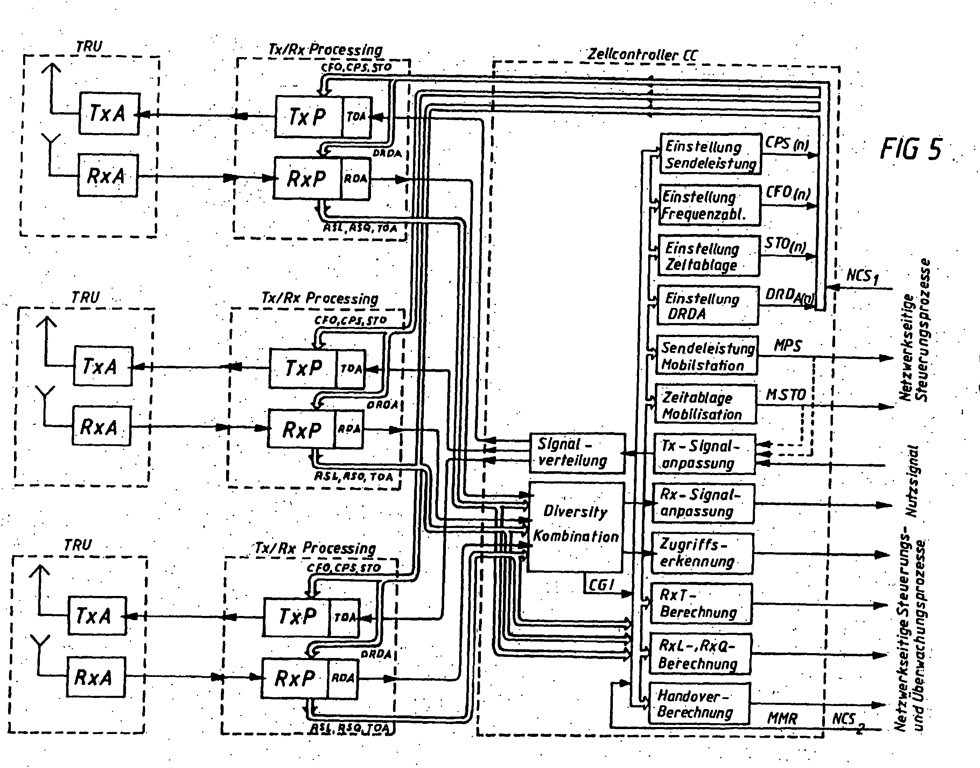

Das Übersichtsblockdiagramm in Figur 4 veranschaulicht die Struktur und die Einrichtungen der Erfindung. Es ist zu erkennen, daß das dargestellte Gesamtsystem am Beispiel von drei Feststationen pro Zelle aus insgesamt drei Sende-Empfangseinheiten TRU (Tansmitter/Receiver Unit), drei Sende-/ Empfangs-Signalverarbeitungseinheiten (Block Tx/Rx Processing) und einem Zellcontroller CC besteht. Dieses Diagramm ist für die verschiedenen im folgenden erwähnten Ausführungsformen gleich. Figur 5 gibt detaillierteren Aufschluß über die verwendeten Funktionsblöcke innerhalb des Gesamtsystems. Dabei bedeuten die verschiedenen Abkürzungen:

CC      Cell-Controller (Zellcontroller)
CFO     Carrier Frequency Offset (Trägerfrequenzversatz)
CGI     Combiner-Generated Information (Information des Kombinierers)
CPS     Channel Power Setting (Sendeleistungseinstellung Feststation)
DRDA    Dynamic Receive Delay Adjustment (dynamische Verzögerungseinstellung Empfangszweig)
MMR    Mobile station Measurement Report (Meßinformationen der Mobilstation)
MPS    Mobile station Power Setting (Sendeleistungseinstellung Mobilstation)
NCS    Network Control Signals (Steuersignale des Netzwerks)
RDA    Receive Delay Adjustment (Verzögerungseinstellung Empfangszweig)
RSL    Receive Signal Level (Empfangspegel)
RSQ    Receive Signal Quality (Empfangsqualität)
RxA    Receiver Amplifier (Empfangsverstärker/Mischer)
RxL    Receive Level (modifizierter Empfangspegel, nicht identisch mit RSL)
RxP    Receiver Processing (Signalverarbeitung Empfangszweig)
RxQ    Receive Quality (modifizierte Empfangsqualität, nicht identisch mit RSQ)
RxT    Receive Timing (modifizierte Zeitlage Empfangssignal, nicht identisch mit TOA)
STO    Signal Timing Offset (Signalzeitversatz Feststation)
TDA    Transmit Delay Adjustment (Verzögerungseinstellung Sendezweig)
TOA    Time of Arrival (Zeitlage Empfangssignal)
TRU    Transmitter Receiver Unit (Sende-/Empfangseinheit)
TxA    Transmitter Amplifier (Sendeverstärker/Mischer)
TxP    Transmitter Processing (Signalverarbeitung Sendezweig)

Tx/Rx-Processing    Sende-/Empfangs-Signalverarbeitung

Ein wesentliches Merkmal der erfindungsgemäßen Lösung besteht darin, daß die in den Feststationen installierten Sender und Empfänger sehr einfach gehalten werden können.

Dabei wird kein Unterschied gemacht zwischen den verschiedenen eine Zelle gemeinsam versorgenden TRUs inklusive Tx/Rx-Processing-Einheiten. Das bedeutet, daß die Schnittstelle zwischen dem Zell-Controller CC und den verschiedenen Tx/Rx-Processing-Einheiten identisch ist, unabhängig davon, ob sich beispielsweise eine Tx/Rx-Processing-Einheit am Ort des CC befindet oder sich die Einheiten TRU und Tx/Rx-Processing an einer räumlich entfernten Feststation befinden. Daraus ergibt sich als Folgerung, daß der CC nicht unbedingt in einer Feststation angeordnet werden muß, sondern auch an einem anderen geeigneten Ort, z.B. bei der nach GSM vorgesehenen hierachisch nächsthöheren Einheit BSC, untergebracht werden kann.

Verschiedene mögliche Ausführungsformen der Erfindung unterscheiden sich in der Art der Aufteilung der Funktionen zwischen TRUs, Tx/Rx-Processing-Einheiten und CC. Davon abhängig sind auf den Schnittstellen zwischen CC und Tx/Rx-Processing-Einheiten bzw. Tx/Rx-Processing-Einheiten und TRUs unterschiedliche Signale zu übertragen.

In einer ersten Ausführungsform ist der Block Tx/Rx-Processing am Ort der Feststation untergebracht. Auf der Schnittstelle zwischen CC und Tx/Rx-Processing-Einheiten liegen die Nutzsignale in noch zu codierender, nicht verschachtelter und nicht verschlüsselter Form vor. Dies bedeutet, daß in den Feststationen die Funktionen Kanalcodierung,Bit und Blockverschachtelung, Verschlüsselung sowie Modulation (Tx-Processing) und Leistungsverstärkung (TxA) im Sendeweg realisiert sind. Der Empfänger in der Feststation beinhaltet die entsprechenden inversen Funktionen wie Empfängereingangsstufen, ZF-Mischer und Verstärker (RxA) sowie die Entzerrung, Demodulation, Entschachtelung und Entschlüsselung und Kanaldecodierung (Rx-Processing).

In einer zweiten Ausführungsform befindet sich der Block Tx/Rx-Processing am Ort des Zellcontrollers CC. Auf der Schnittstelle zwischen Tx/Rx-Processing-Einheit und TRU werden die Signale in modulierter Form übertragen, beispielsweise als ZF-Signal über eine Richtfunkverbindung. In diesem Fall befinden sich Modulation/Demodulation und Entzerrung am Ort des CC. Diese Ausführungsform eröffnet beispielsweise die Möglichkeit, die empfangsseitige Entzerrung für die verschiedenen Teilsignale der TRU einer Zelle und deren Kombination zu einem Gesamtsignal im Funktionsblock 'Diversity Kombination gemeinsam durchzuführen.

In einer dritten Ausführungsform ist der Block Tx/Rx-Processing zu einem Teil am Ort der Feststation und zu einem anderen Teil am Ort des CC untergebracht. Auf der Schnittstelle zwischen CC und Tx/Rx-Processing-Einheiten werden die Nutzsignale in digitaler Form als Bits so übertragen, wie sie auch in den auf der Funkschnittstelle definierten bursts auftreten. Es handelt sich also um codierte, verschachtelte und verschlüsselte Bits. Demgemäss werden die Funktionen Codierung, Verschachtelung und Verschlüsselung im Sendezweig sowie die entsprechenden inversen Funktionen im Empfangszweig am Ort des CC vorgenommen. Diese Funktionen können dabei entweder getrennt für jede der angeschlossenen Feststationen als Teil des Tx/Rx-Processing oder aber für alle angeschlossenen Feststationen gemeinsam in den netzwerkseitigen Funktionsblöcken zur Tx- bzw. Rx-Signalanpassung realisiert werden. Dementspechend beinhalten die Feststationen neben den Funktionen des TRU die restlichen Teile des Tx/Rx-Processing, nämlich den Modulator im Sendezweig sowie Demodulation und Entzerrung im Empfangszweig.

Weiterhin sind auch Mischformen dieser Ausführungsform möglich dadurch, daß in einer Übertragungsrichtung beispielsweise die erste Form und in der umgekehrten Richtung z.B. die zweite Form verwendet wird oder daß in den Tx/Rx-Processing-Einheiten nur ein Teil der genannten Funktionen realisiert wird.

Zur optimierten Berechnung der verschiedenen Parameter einer Zelle mit Mehrfachversorgung im Zellcontroller sind möglichst zuverlässige Messwerte über die Übertragungsbedingungen heranzuziehen. Je nach Ausführung der Feststationen und der Mobilstation können dazu zählen:

.    Empfangspegelmessungen

.    Empfangsqualitätsmessungen

.    Ergebnis der Korrelation mit Trainingssequenzen

.    Distanzmaße bei der Entzerrung

.    Decodierungsergebnisse (z.B. erkannte oder korrigierte Fehler)

.    Laufzeitmessungen

Diese Messungen sind sowohl von der Mobilstation als auch von allen beteiligten Feststationen vorzunehmen. Je nach Implementierung können alle angegebenen Werte, eine Teilmenge davon oder ähnliche Meßwerte bestimmt werden. Nach Figur 5 finden sich die oben angegebenen Meßwerte in den Größen RSL, RSQ, TOA, MMR und CGI wieder.

Der Zellcontroller hat die Aufgabe, aufgrund der vorliegenden Meßwerte die optimalen Parameter zur Steuerung der Verbindung und zur geeigneten Darstellung für die übergeordneten Ebenen zu berechnen. Ferner führt er die Nutzsignal-Kombination im Uplink durch. Die einzelnen Funktionen und ihre Bedeutung werden nachfolgend näher beschrieben.

Im folgenden werden die Funktionen des Zellcontrollers zur Berechnung der verschiedenem Zellparameter im einzelnen beschrieben.

1 Sendeverzögerung (Transmit Delay Adjustment TDA) Empfangsverzögerung (Receive Delay Adjustment RDA)

Das Verfahren nach DE-OS 41 41 398 A1 macht davon Gebrauch, daß eine Mobilstation von mehreren Festsendern mit demselben Sendesignal versorgt wird. Bei Einsatz innerhalb eines zeitkritischen Zugriffsverfahrens wie z.B. TDMA (Time Division Multiple Access.) muß sichergestellt werden, daß die Überlagerung dieser Signale nicht zu schädlichen Intersymbol-Interferenzen führt, oder daß eine geeignete Entzerrungseinrichtung in der Mobilstation vorhanden ist; wie dies bei GSM vorgesehen ist. In jedem Fall müssen die Signale die Mobilstation weitgehend zeitgleich mit einer bestimmten zeitlichen Toleranz erreichen, weil sonst aufgrund der adaptiven Entzerrung keine Verbesserung, sondern unter Umständen eine Verschlechterung der Übertragungsqualität eintritt. Deshalb wird ein fester Laufzeitausgleich TDA für jeden Verbindungsweg zwischen Zellcontroller und den Feststationen eingestellt, welcher die Anpassung der verschiedenen Laufzeiten des Downlink-Signals zwischen Zellcontroller und Feststation derart vornimmt, daß die Sendeeinrichtungen (TxA) im Gleichwellenbetrieb arbeiten.

Im Uplink müssen dem Zellcontroller die Empfangssignale aller Feststationen ebenfalls zeitgleich vorliegen, um eine optimale Weiterverarbeitung zu gewährleisten. Dafür ist ebenfalls ein fester Laufzeitausgleich RDA erforderlich, um die unterschiedlichen Laufzeiten zwischen Feststationen und Zellcontroller zu kompensieren.

Die Fünktionsblöcke TDA und RDA können entweder im Zellcontroller oder in den Feststationen lokalisiert sein. Ebenfalls möglich sind Mischformen, wobei der TDA im Zellcontroller und der RDA in den Feststationen oder auch umgekehrt angeordnet ist.

Bei kleinen Zellradien können diese Verzögerungsblöcke unter Umständen entfallen.

2 Signalzeitversatz Feststation (Signal Timing Offset STO) Dynamische Verzögerungseinstellung Empfangszeig (Dynamic Receive Delay Adjustment DRDA)

Diese beiden Funktionsblöcke und die von Ihnen erzeugten Steuersignale dienen der weiteren Verbesserung der Übertragungsverhältnisse in den beiden Richtungen und könnnen auch unabhängig voneinander optional vorgesehen werden.

Wie bereits im Zusammenhang mit Figur 2 erwähnt, erfahren die Downlink- und Uplink-Signale auf ihrem Weg BS-MS bzw. MS-BS unterschiedliche Verzögerungen in Abhängigkeit von der Position der Mobilstation MS innerhalb der Zelle. Um die Übertragungsqualität weiter zu erhöhen, wird eine dynamische Kompensation dieser unterschiedlichen Laufzeiten vorgenommen. Mit Hilfe dieser Maßnahme werden auftretende Eigeninterferenzen (Intersymbolinterferenz) minimiert. Hierfür muß für jeden Verbindungspfad zwischen einer Feststation und der Mobilstaticn die jeweilige Laufzeit ermittelt und ausgeglichen werden. Im Downlink wird dazu der Sendezeitpunkt der jeweiligen Feststation mittels STO eingestellt. Im Uplink werden die Empfangssignale der einzelnen Feststationen mittels DRDA unterschiedlich verzögert. Bei Systemen mit Entzerrer können darüberhinaus die einzelnen Zeitlagen so eingestellt werden, daß die Signale zu definiert unterschiedlichen Zeitpunkten innerhalb des Entzerrerfensters empfangen werden und damit ein maximaler Gewinn im Entzerrer durch Zeitdiversität erzielt wird.

Zur korrekten Berechnung von STO und DRDA bedient sich der Zellcontroller der Meßwerte RSL, RSQ, TOA, MMR und CGI.

Der jeweilige Laufzeitausgleich kann entweder in der Tx/Px-Processing-Einheit oder innerhalb der Blöcke 'Signalverteilung' bzw. 'Diversity-Kombination' durchgeführt werden.

3 Sendeleistungseinstellung Feststation (Channel Power Setting CPS)

Dieser Funktionsblock und das von ihm erzeugte Steuersignal dient der Regelung der Sendeleistungen der Feststationen und ist als Option vorgesehen.

Für eine optimale Übertragungsqualität sollte der auf dem Kanal herrschende minimale Signal-/Interferenz-Störabstand im gesamten System möglichst hoch sein.

Deshalb ist es vorteilhaft, in Abhängigkeit von der Position der Mobilstation die Sendeleistungen der sie versorgenden Feststationen im Downlink derart dynamisch einzustellen, daß die minimalen Signal-/Interferenz-Störabstände maximiert werden. Die optimale Leistungszüweisung wird im Zellcontroller aus den verschiedenen, oben angegebenen Eingangsgrößen wie z.B. RSL, RSQ, TOA, MMR und CGI sowie evtl. netzwerkseitiger Informationen, s. Figur 5, bestimmt. Hierbei kann sowohl die Gesamtsendeleistung der Feststationen einer Zelle als auch die anteilsmässige Aufteilung dieser Gesamtleistung auf die einzelnen Feststationen oder beides gesteuert werden.

4 Sendeleistungseinstellung Mobilstation (Mobile Station Power Setting MPS)

Hier gilt das im vorigen Punkt Gesagte entsprechend. Die optimale Leistungsregelung wird ebenfalls im Zellcontroller aus den verschiedenen, oben angebenen Eingangsgrößen RSL, RSQ; TOA, MMR und CGI bestimmt.

Zur Einbingung der Steuerinformation MPS in das Nutzsignal sind drei Varianten möglich. Zum einen kann das Einfügen des MPS-Signals innerhalb des Blocks Tx-Signalanpassung geschehen (in Figur 5 gestrichelt gezeichnet). Als zweites ist die Weitergabe des Signals MPS an das übergeordnete Netzwerk möglich, das dann das Einbinden in das Nutzsignal vornimmt. Als dritte Möglichkeit kann das übergeordnete Netzwerk das Signal MPS z.B. aus den Werten RxL und RxQ rekonstruieren und in das Nutzsignal einfügen, so daß dann der in Figur 5 dargestellte Block "Sendeleistung Mobilstation" entfallen kann.

5 Trägerfrequenzversatz (Carrier Frequency Offset CFO)

Dieser Funktionsblock und damit das von ihm erzeugte Steuersignal ist ebenfalls als Option vorgesehen.

Zur Optimierung der Funkversorgung ist es denkbar, die Trägerfrequenzen der einzelnen Feststationen um einen bestimmten kleinen Betrag unterschiedlich zu wählen. Diese geringe Abweichung lässt sich mit Hilfe des CFO einstellen. Der Zweck besteht darin, Fadingeinbrüche des Empfangspegels für sich nicht bewegende Teilnehmer auszugleichen. Mit Hilfe von leicht unterschiedlichen Trägerfrequenzen wird an allen Orten innerhalb der Zellfläche mit signifikanter Mehrfachversorgung ein zeitlich konstanter Fadingeinbruch vermieden.

## 6 Signalzeitversatz Mobilstation (Mobile station Signal Timing Offset MSTO)

Der Sendezeitpunkt der Mobilstation wird im allgemeinen von der Festseite gesteuert. Da nun mehrere Feststationen mit einer Mobilstation verbunden sind, ist der optimale Sendezeitpunkt im Zellcontroller zu berechnen und von jeder Feststation einheitlich zur Mobilstation zu übermitteln. Als Eingangswerte zur Berechnung des optimalen Sendezeitpunktes MSTO sind je nach Implementierung die verschiedenen Meßwerte RSL, RSQ, TOA, MMR und CGI heranzuziehen.

Zur Einbindung der Steuerinformation MSTO in das Nutzsignal sind, ähnlich wie in Abschnitt 4 für das Signal MPS dargestellt, drei Varianten möglich. Es ist hier ebenfalls die Einbindung des Signals innerhalb des Blocks Tx-Signalanpassung sowie die Weitergabe an das übergeordnete Netzwerk möglich, das dann das Einfügen in das Nutzsignal vornimmt. Als dritte Möglichkeit kann hier das Signal MSTO vom übergeordneten Netzwerk, z.B. aus dem Wert RxT rekonstruiert und in das Nutzsignal eingefügt werden, so daß dann der in Figur.5 dargestellte Block "Zeitablage Mobilstation" entfallen kann.

## 7 Signalverteilung

Die innerhalb einer Zelle von den verschiedenen Feststationen der Zelle auf jedem Träger ausgesendeten Signale müssen im Basisband identisch sein. Der Block Signalverteilung sorgt für die korrekte Verteilung und Zuordnung der Signale zu den jeweiligen Feststationen.

## 8 Tx/Rx-Signalanpassung

Je nach Implementierung der Signalverteilung bzw. der Diversity-Kombination (s.u.) kann es notwendig sein, die entsprechenden Signale zur Weiterverarbeitung in der hierarchisch nächsthöheren Einheit zu konvertieren bzw. anzupassen. Beispielsweise kann es in einer Ausführungsform notwendig sein, die Kanaldecodierung im Empfangszweig nach der Diversity-Kombination durchzuführen. Dazu dient die Funktionseinheit 'Rx-signalanpassung'. Dementsprechend könnte die Funktionseinheit 'Tx-Signalanpassung' die Kanalcodierung im Sendezweig vornehmen.

## 9 Zugriffserkennung

Bei gleichzeitigem Erstzugriff mehrerer Mobilstationen können unter Umständen mehrere Zugriffe korrekt erkannt werden, wenn sie im wesentlichen von unterschiedlichen Feststationen der Zelle empfangen werden. Hierbei kann vorgesehen werden, daß nur einer dieser Zugriffe ausgewählt und für die Zuteilung eines dezidierten Kanals weitergeleitet wird.

Alternativ wird eine Variante vorgeschlagen, bei der alle korrekt erkannten Zugriffe nacheinander bedient werden.

## 10 RxT-, RxL-, RxQ-Berechnung

Für netzwerkseitige Regelungs- und Überwachurigsprozesse kann es notwendig sein, bestimmte charakteristische Größen der Funkübertragung an die hierarchisch höherliegenden Einheiten zu übertragen. So stehen im GSM-System dem BSC Meßwerte über Empfangspegel (RXLEV) und Empfangsqualität (RXQUAL) beispielsweise für mögliche Handoverentscheidungen zur Verfügung. Diese. hier allgemein mit RxT, RxL und RxQ bezeichneten Größen sind die entsprechenden an die wetzwerkseitigew Steuerungs- und Überwachungsprozesse übergebenen resultierenden Werte für die Zeitlage der Mobilstation (RxT), die Empfangspegel der Feststationen (RxL) sowie die Empfangsqualität der Feststationen (RxQ). Sie müssen nicht mit den im Gesamtsystem intern verwendeten Größen (s. Figur 5) RSL, RSQ und TOA übereinstimmen. Zur Berechnung der entsprechenden Werte RxT, RxL und RxQ können ferner im Block 'Diversity Kombination' generierte Informationen CGI (Combiner-Generated Information) herangezogen werden.

## 11 Handover-Berechnung

Die in der DE-OS 41 41 398.9 erwähnte Funknetzarchitektur weist neben der Mehrfachversorgung einer Zelle durch mehrere Feststationen eine definierte Überlappung der Zellen in bestimmten Bereichen auf. Dies hat den Vorteil, daß im Gegensatz zu konventionellen Funknetzarchitekturen ein Handover im Bereich hoher Signal-/Interferenz-Störabstände eingeleitet werden kann. Damit wird ein qualitätsneutraler, sicherer Handover gewährleistet. Aufgrund der veränderrten Signal-/Interferenz-Storabstände bzw. veränderter Leistungspegel benachbarter Trägerfrequenzen im Handoverbereich sind herkömmliche Handover-Algorithmen, die im wesentlichen auf Pegelmessungen benachbarter Träger durch die Mobilstation basieren, nicht optimal geeignet.

Bei der Funknetzarchitektur mit Mehrfachversorgung sind die Meßwerte im Uplink stärker zu berücksichtigen, da durch den Empfang an verschiedenen räumlich weit entfernten Standorten eine verbesserte Positionsbestimmung der Mobilstation möglich ist. Zum Beispiel stellen die folgenden Gleichungen die äußeren Zellbegrenzungen einschließlich eines Hysteresebereich für Handover dar.

$$e_{jk} \frac{d_i}{d_i+d_j} + e_{ik} \frac{d_j}{d_i+d_j} - d_k > 0 \qquad i,j,k=1,2,3$$

Dabei gibt $e_{ij} = e_{ji}$ die Entfernung zwischen $BS_i$ und $BS_j$, und $d_i$ die von $BS_i$ gemessene Entfernung zur Mobilstation an.

Zu Weitergabe von den Handover betreffenden Informationen vom Zellcontroller an die nächste übergeordnete Einheit werden zwei Verfahren vorgeschlagen.

Zum einen ist es möglich, die Gesamtheit der Meßwerte im Uplink und Downlink auf einen äquivalenten Satz von Werten abzubilden, der bei einer. Einfachversorgung der Zelle für die gleiche Position der Mobilstation auftreten würde. Führt der Zellcontroller diese Abbildung durch und liefert den abgebildeten Datensatz an die übergeordnete Einheit, so sind dort keine Änderungen bezüglich des Handoveralgorithmus notwendig.

Alternativ können der übergeordneten Einheit zusätzliche Daten übermittelt werden, die sich aufgrund der höheren Anzahl und Unabhängigkeit der Meßwerte der Fest- und Mobilstation ergeben. Hier ist z.B. ein Zuverlässigkeitswert möglich, der Einfluß auf die Dringlichkeit der Handoverentscheidung nehmen kann.

## 12 Diversity-Kombination im Uplink

Das von der Mobilstation gesendete Signal wird in der Regel von mehreren Feststationen einer Zelle gut empfangen. Daher kann im Uplink aufgrund der guten Dekorrelation (räumliche Entfernung, unterschiedliche Einfallswinkel) ein großer Diversity-Gewinn erzielt werden, der besonders Mobilstationen mit geringer Sendeleistung unterstützt.

Wie bereits eingangs bei der Darstellung der verschiedenen Ausführungsformen erwähnt, kann dieses Diversity-Verfahren unterschiedlich vorgenommen werden.

Eine Möglichkeit besteht darin, im Zellcontroller nur das aufgrund eines Gütekriteriums ermittelte beste Empfangssignal einer Feststation der Zelle auszuwählen und weiterzuleiten ("selection combining"). Die Entscheidung kann grundsätzlich auf ZF-Ebene, Bitebene, Burstebene oder Meldungsebene bzw. pro Sprachrahmen erfolgen. Das Gütekriterium kann aus einem oder mehreren der Meßwerte RSL, RSQ, TOA, MMR u. CGI im Downlink und Uplink oder ähnlichen Werten abgeleitet werden.

Verfeinerte Verfahren mit einer linearen oder nichtlinearen Kombination der von den Feststationen einer Zelle empfangenen Signale auf den genannten Ebenen und mit aus den genannten Kriterien abgeleiteten Gewichtungen sind möglich. Dabei sind gegebenenfalls die Unterschiede in den Laufzeiten zwischen Mobilstation und den Feststationen sowie zwischen den Feststationen und dem Zellcontroller zu kompensieren, damit eine phasenrichtige Kombination der Signale sichergestellt wird (s.Abschnitte 1 und 2).

## 13 Meßinformationen der Mobilstation MMR

Die Meßinformationen MMR der Mobilstation sind im allgemeinen im Uplink-Nutzsignal in codierter Form vorhanden.

Das MMR-Signal kann somit zum einen bei der Rx-Signalanpassung extrahiert werden oder wie in Figur 5 dargestellt vom Netzwerk extrahiert werden und an den Zellcontroller CC zurückgesendet werden.

## 14 Steuersignale des Netzwerks NCS

Das Netzwerk liefert dem Zellcontrollerr CC in der Regel verschiedene Informationen zur Steuerung von entsprechenden Funktionen. Als Beispiele sind hierbei die Leistungssteuerung der Feststation(en) oder der Mobilstation, die Frequenzsequenzen bei Frequency Hopping oder Schlüssel und weitere relevante Informationen bei der Verwendung eines Verschlüsselungsalgorithmus auf der Funkschnittstelle genannt. Die Steuersignale können direkt an die Rx/Tx-Processing-Einheiten übertragen werden (in Figur 5 mit $NCS_1$ dargestellt) oder ähnlich wie die MMR-Signale als zusätzliche Eingangsgrößen der verschiedenen Prozesse des Zellcontrollers verwendet werden (in Figur 5 mit $NCS_2$ dargestellt). Je nach Art des jeweiligen Steuersignals und der Implementierungsvariante bietet sich eine Signalführung nach der ersten oder der zweiten Variante oder nach beiden Varianten gleichzeitig an.

## 15 Optimierung der Verbindungswege

In der neuen Netzarchitektur ist es möglich, mehrere Zellcontroller für mehrere Zellen bei günstiger Plazierung mit möglichst geringem Aufwand für die Festleitungen an hierarchisch höhere Einheiten anzubinden. Dies wird nachfolgend am bereits dargestellten Beispiel der Mehrfachversorgung einer Zelle mit drei Feststationen gezeigt.

Der in Figur 3 dargestellte Zellcontroller befindet sich vorteilhafterweise an einer der drei eine Zelle versorgenden Feststationen (dabei spielt es keine Rolle, wo die Rx/Tx-Processing-Einheiten lokalisiert sind). Diese Feststation sei im folgenden uanbhängig von ihrer entweder komplexen oder weniger komplexen Implementierung mit Master-BS bezeichnet, die beiden anderen einer Zelle zugehörigen BS als Slave-BS. Durch die Anwendung der neuen Funknetzarchitektur ergeben sich folgende Konsequenzen:

Lediglich die Master-BS bzw. der Zellcontroller ist über eine herkömmliche Schnittstelle mit der hierarchisch höherliegenden Einheit verbunden. Diese Schnittstelle entspricht derjenigen, welche auch in einer herkömmlichen Architektur zwischen jeder Feststation und der höherliegenden Einheit vorhanden ist.

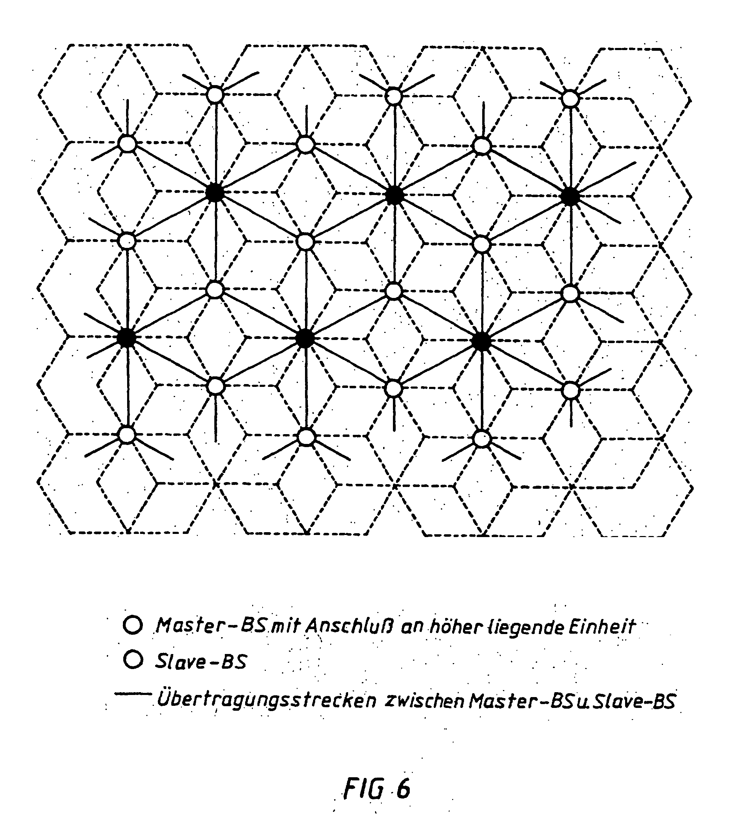

Die Slave-BSn stehen mit der Master-BS bzw. dem Zellcontroller über eine zusätzliche Schnittstelle in Verbindung. Im Vergleich zu einer herkömmlichen Architektur ohne Mehrfachversorgung wird die dort vorhandene Verbindung zu einer höheren Einheit durch eine Verbindung zu der Master-BS ersetzt. Dies hat zur Folge, da zwar zusätzliche Verbindungswege zwischen Master - und Slave-BS bentöigt werden, die Anzahl der mit der höherliegenden Einheit verbundenen (Master-) BS hingegen bei geschickter räumlicher Anordnung auf ein Drittel sinkt. Figur 6 verdeutlicht dies. Allerdings ergibt sich dadurch kein verringerter Kapazitätsbedarf auf der Schnittstelle zwischen Master-BS und höherliegender Einheit. Man erreicht aber einen Bündelgewinn.

Diese Optimierung bezüglich des Bündelgewinns ist auch für konventionelle Funknetzarchitekturen mit Einfachversorgung möglich.

**Patentansprüche**

1. Steuerungseinrichtung für die Funkversorgung eines zellularen, digitalen Mobilkommunikationssystems nach einem verbesserten Verfahren zur Funkzellenausleuchtung, bei welchem jede Zelle von Zellenrand her durch mehrere Feststationen (BS) im Gleichwellenbetrieb mit demselben Signal über Sektorantennen versorgt 'wird, wobei die auf dem Träger jeder Feststation ausgesendeten signale im Basisband identisch sind, wobei zwischen den Feststationen (BS) und der hierarchisch höherliegenden Einheit ein Zellcontroller (CC) vorgesehen ist, der eine Verbundoptimierung der sich ergebenden unterschiedlichen Zellenparameter durchführt, indem der Zellcontroller (CC) im Downlink innerhalb der Zelle eine korrekte Verteilung und Zuordnung der Signale zu den jeweiligen Feststationen (BS) der Zelle sicherstellt, und im Uplink eine zentrale Einheit (Diversity-Combination) zur Kombination der verschiedenen Nutzsignale der jeweiligen Feststationen (BS) zu einem Gesamtsignal aufweist, wobei der Zellcontroller (CC) die sich durch die Mehrfachausleuchtung der Zelle ergebenden neuen Funktionen zur Signalverarbeitung der Signale, zu und von den Feststationen (BS) bzw. zu und von den hierarchisch höheren Netzwerkeinheiten sowie zur Steuerung der Funkeinrichtungen der einzelnen Feststationen (BS) beinhaltet der Zellcontroller (CC) **dadurch gekennzeichnet, daß** die individuelle Sendeleistung jeder einzelnen der ihm zugeordneten Feststationen (BS), sowie die gesamte in die Zelle abgestrahlte Leistung abhängig vom Empfangspegel und der Position einer Mobilstation (MS) dynamisch einstellt.

2. Steuerungseinrichtung für die Funkversorgung nach Anspruch 1, **dadurch gekennzeichnet, daß** die zentrale Einheit (Diversity-Combination) nur das aufgrund eines Gütekriteriums ermittelte beste Empfangssignal jeder Feststation auswählt und weiterleitet.

3. Steuerungseinrichtung nach Anspruch 1, **dadurch gekennzeichnet, daß** die zentrale Einheit (Diversity-Combination) eine lineare oder nichtlineare Gewichtung und Kombination der von den Feststationen einer Zelle empfangenen Signale durchführt und diese weiterleitet.

4. Steuerungseinrichtung nach Anspruch 1, **dadurch gekennzeichnet, daß** die zentrale Einheit (Diversity-Combination) die empfangsseitige Entzerrung gemeinsam für die verschiedenen Teilsignale einer Zelle durchführt und diese zu einem Gesamtsignal kombiniert.

5. Steuerungseinrichtung für die Funkversorgung nach einem der Ansprüche 1-4, **dadurch gekennzeichnet, daß** die jeweiligen die Zelle versorgenden Sende-/Empfangseinheiten der Feststationen (BS) über jeweils identische Sende-Empfangs-Signalverarbeitungseinheiten mit dem Zellcontroller (CC) verbunden sind.

6. Steuerungseinrichtung für die Funkversorgung nach einem der Ansprüche 1-5, **dadurch gekennzeichnet, daß** sich die gesamte Sende-/Empfangs=Signalverarbeitungseinheit jeweils am Ort der Feststation (BS) befindet.

7. Steuerungseinrichtung für die Funkversprgung nach einem der Ansprüche 1-5, **dadurch gekennzeichnet, daß** sich die gesamte Sende-/Empfangssignalverarbeitungseinheit jeweils am Ort des Zellcontrollers (CC) befindet.

8. Steuerungseinrichtung für die Funkversorgung nach einem der Ansprüche 1-5, **dadurch gekennzeichnet, daß** sich die einzelnen Funktionsblöcke der Sende-/Empfangs-Signalverarbeitungseinheit (Tx/Rx-Processing) zum einen Teil am Ort der Feststation (BS) und zum anderen Teil am Ort des Zellcontrollers (CC) befinden.

9. Steuerungseinrichtung für die Funkversorgung nach einem der Ansprüche 1-8, **dadurch gekennzeichnet, daß** zwischen Zellcontroller (CC) und den zugehörigen Feststationen (BS) Einrichtungen zur festen Sendesignalverzögerung (TDR) und Empfangssignalverzögerung (RDR) vorgesehen sind, welche die Laufzeit der Signale zwischen dem Zellcontroller (CC) und den zugehörigen Feststationen (BS) ausgleichen.

10. Steuerungseinrichtung für die Funkversorgung nach einem Ansprüche 1-9, **dadurch gekennzeichnet, daß** im Sende- und Empfangszweig jeder Feststation (BS) Einrichtungen zur dynamischen Sendesignalverzögerung (STO) und Empfangssignalverzögerung (DRDA) vorgesehen sind, wobei der gegenseitige Zeitversatz der einzelnen Signale so eingestellt wird, daß entweder minimale Eigeninterferenz, maximaler Entzerrergewinn oder ein günstiger Kompromiß beider Eigenschaften erzielt wird.

11. Steuerungseinrichtung für die Funkversorgung nach einem der Ansprüche 1-10, **dadurch gekennzeichnet, daß** der Zellcontroller (CC) einen Trägerfrequenzversatz (CFO) vorsieht, so daß sich die Trägerfrequenzen der die Mobilstation (MS) versorgenden Feststationen (BS) einer Zelle um einen bestimmten Betrag unterscheiden.

12. Steuerungseinrichtung für die Funkversorgung nach einem der Ansprüche 1-11, **dadurch gekennzeichnet, daß** im Zellcontroller (CC) der Sendezeitpunkt der Mobilstation (MS) berechnet wird, der von jeder Feststation (BS) einheitlich zur Mobilstation (MS) übermittelt wird.

13. Steuerungseinrichtüng für die Funkversorgung nach einem der Ansprüche 1-12, **dadurch gekennzeichnet, daß** der Zellcontroller (CC) eine Signalanpassung entsprechender Signale vorsieht, die zur Weiterverarbeitung in die hierarchisch nächst höhere Einheit übertragen,. als auch von dieser Einheit zurück übertragen werden.

14. Steuerungseinrichtung für die Funkversorgung nach einem der Ansprüche 1-13, **dadurch gekennzeichnet, daß** bei gleichzeitigem Erstzugriff mehrerer Mobilstationen (MS), die korrekt erkannten Zugriffe nacheinander bedient werden.

15. Steuerungseinrichtung für die Funkversorgung nach einem der Ansprüche 1-14, **dadurch gekennzeichnet, daß** bei gleichzeitigem Erstzugriff mehrere Mobilstationen (MS) nur einer der korrekt erkannten Zugriffe ausgewählt und bedient wird.

16. Steuerungseinrichtung für die Funkversorgung nach einem der Ansprüche 1-15, **dadurch gekennzeichnet, daß** vom Zellcontroller (CC) bestimmte charakteristische Größen der Funkübertragung berechnet und an die hierarchisch höher liegende Einheit übertragen werden.

17. Steuerungseinrichtung für die Funkversorgung nach einem der Ansprüche 1-16, **dadurch gekennzeichnet, daß** zur Berechnung des Handover die im zellcontroller vorliegenden Meßwerte auf einen äquivalenten Satz von Meßwerten abgebildet werden, welcher bisherigen Handover-Berechnungen als Grundlage dient, so daß in bestehenden Systemen keine Änderungen des Handover-Algorithmus notwendig sind.

18. Steuerungseinrichtung für die Funkversorgung nach einem der Ansprüche 1-17, **dadurch gekennzeichnet, daß** zur Berechnung des Handover zusätzliche Daten an die übergeordnete Einheit übermittelt werden, welche die Handover-Entscheidung beeinflussen.

19. Steuerungseinrichtung für die Funkversorgung nach einem der Ansprüche 1-18, **dadurch gekennzeichnet, daß** die Meßinformationen (MMR) der Mobilstation aus dem Uplinknutzsignal während der Empfangssignalanpassung extrahiert werden.

20. Steuerungseinrichtung für die Funkversorgung nach einem der Ansprüche 1-19, **dadurch gekennzeichnet, daß** die Meßinformationen (MMR) der Mobilstation in einer hierarchisch höheren Einheit extrahiert werden und an den Zellcontroller (CC) zurückgesendet werden.

21. Steuerungseinrichtung für die Funkversorgung nach einem der Ansprüche 1-20, **dadurch gekennzeichnet, daß** die Steuersignale (NCS1) der hierarchisch höher liegenden Einheit direkt an die Empfangs-/Sendesignalverarbeitungseinheiten (Tx/Rx-Processing) übertragen werden.

22. Steuerungseinrichtung für die Funkversorgung nach einem der Ansprüche 1-21, **dadurch gekennzeichnet, daß** die Steuersignale (NCS2) der hierarchisch höher liegenden Einheit als zusätzliche Eingangsgrößen der verschiedenen Prozesse im Zellcontroller (CC) verwendet werden.

23. Steuerungseinrichtung für die Funkversorgung nach einem der Ansprüche 1-22, **dadurch gekennzeichnet, daß** sich jeweils Zellcontroller (CC) für ein oder mehrere Zellen in einer den Zellen gemeinsamen Feststation (BS) befinden, und diese Feststation (BS) zur Master-Feststation. (Master-BS) erheben, wobei die anderen den Zellen zugehörigen Feststationen (BS) als Slave-Feststationen (Slave-BS) arbeiten, so daß nur ein Bruchteil aller Standorte Master-Feststationen (Master-BS) enthalten.

24. Steuerungseinrichtung für die Funkversorgung nach einem der Ansprüche 1-23, **dadurch gekennzeichnet, daß** lediglich die Master-Feststation (Master-BS) über den Zellcontroller (CC) und über eine herkömmliche Schnittstelle mit der hierarchisch höher liegenden Einheit verbunden ist.

25. Steuerungseinrichtung für die Funkversorgung nach einem der Ansprüche 1-24, **dadurch gekennzeichnet, daß** die Slave-Feststationen (Slave-BS) mit dem Zellcontroller (CC) in der Master-Feststation (Master-BS) über eine zusätzliche Schnittstelle in Verbindung stehen.

## Claims

1. Control device for radio coverage of a cellular, digital mobile communication system by an improved method for cell illumination in which each cell is covered from the edge of the cell by several base stations (BS) by common-wave broadcasting with the same signal via sector aerials, wherein the signals emitted on the carrier of each base station are identical in baseband, wherein between the base stations (BS) and the hierarchically higher unit is provided a cell controller (CC) which performs combined optimisation of the different cell parameters arising, by the fact that the cell controller (CC) in the downlink within the cell ensures correct distribution and assignment of the signals to the respective base stations (BS) of the cell, and in the uplink has a central unit (diversity combination) for combination of the different wanted signals of the respective base stations (BS) into a complete signal, wherein the cell controller (CC) contains the new functions resulting from multiple illumination of the cell for signal processing of the signals, to and from the base stations (BS) or to and from the hierarchically higher network units, as well as for control of the radio devices of the individual base stations (BS), **characterised in that** the cell controller (CC) dynamically adjusts the individual transmitting power of each one of the base stations (BS) assigned to it, and the total power radiated into the cell, as a function of the reception level and the position of a mobile station (MS).

2. Control device for radio coverage according to claim 1, **characterised in that** the central unit (diversity combination) selects and transmits only the best receive signal of each base station determined on the basis of a quality criterion.

3. Control device according to claim 1, **characterised in that** the central unit (diversity combination) performs a linear or non-linear weighting and combination of the signals received from the base stations of a cell and transmits these signals.

4. Control device according to claim 1, **characterised in that** the central unit (diversity combination) performs the equalisation on the reception side jointly for the different partial signals of a cell and combines them into a complete signal.

5. Control device for radio coverage according to one of claims 1-4, **characterised in that** the respective transmit/receive units of the base stations (BS) which cover the cell are connected via respectively identical transmit/receive signal processing units to the cell controller (CC).

6. Control device for radio coverage according to one of claims 1-5, **characterised in that** the whole transmit/receive signal processing unit is respectively located in the location of the base station (BS).

7. Control device for radio coverage according to one of claims 1-5, **characterised in that** the whole transmit/receive signal processing unit is respectively located in the location of the cell controller (CC).

8. Control device for radio coverage according to one of claims 1-5, **characterised in that** the individual function blocks of the transmit/receive signal processing unit (Tx/Rx processing) are located partly in the location of the base station (BS) and partly in the location of the cell controller (CC).

9. Control device for radio coverage according to one of claims 1-8, **characterised in that** between the cell controller (CC) and the associated base stations (BS) are provided devices for fixed transmit signal delay (TDR) and receive signal delay (RDR) which equalise the transit time of the signals between the cell controller (CC) and the associated base stations (BS).

10. Control device for radio coverage according to one of claims 1-9, **characterised in that** in the transmit and receive branch of each base station (BS) are provided devices for dynamic transmit signal delay (STO) and receive signal delay (DRDA), wherein the mutual time offset of the individual signals is adjusted in such a way that either minimum inherent interference, maximum equaliser gain or a favourable compromise between the two properties is obtained.

11. Control device for radio coverage according to one of claims 1-10, **characterised in that** the cell controller (CC) provides a carrier frequency offset (CFO), so that the carrier frequencies of the base stations (BS) of a cell which cover the mobile station (MS) differ by a certain amount.

12. Control device for radio coverage according to one of claims 1-11, **characterised in that** in the cell controller (CC) is calculated the transmit time of the mobile station (MS) which is transmitted as standard from each base station (BS) to the mobile station (MS).

13. Control device for radio coverage according to one of claims 1-12, **characterised in that** the cell controller (CC) provides matching of corresponding signals which are transmitted for further processing to the next unit up hierarchically and also are transmitted back from this unit.

**14.** Control device for radio coverage according to one of claims 1-13, **characterised in that** in case of simultaneous initial access by several mobile stations (MS), the correctly detected accesses are served successively.

**15.** Control device for radio coverage according to one of claims 1-14, **characterised in that** in case of simultaneous initial access by several mobile stations (MS), only one of the correctly detected accesses is selected and served.

**16.** Control device for radio coverage according to one of claims 1-15, **characterised in that** characteristic quantities of radio transmission determined by the cell controller (CC) are calculated and transmitted to the hierarchically higher unit.

**17.** Control device for radio coverage according to one of claims 1-16, **characterised in that** for calculation of the handover the measured values present in the cell controller are copied on to an equivalent set of measured values which serves as the basis for previous handover calculations, so that no changes in handover algorithm are necessary in existing systems.

**18.** Control device for radio coverage according to one of claims 1-17, **characterised in that** for calculation of the handover additional data, which influence the handover decision, are transmitted to the higher-ranking unit.

**19.** Control device for radio coverage according to one of claims 1-18, **characterised in that** the measuring information (MMR) of the mobile station is extracted from the uplink wanted signal during receive signal matching.

**20.** Control device for radio coverage according to one of claims 1-19, **characterised in that** the measuring information (MMR) of the mobile station is extracted in a hierarchically higher unit and sent back to the cell controller (CC).

**21.** Control device for radio coverage according to one of claims 1-20, **characterised in that** the control signals (NCS1) of the hierarchically higher unit are transmitted direct to the receive/transmit signal processing units (Tx/Rx processing).

**22.** Control device for radio coverage according to one of claims 1-21, **characterised in that** the control signals (NCS2) of the hierarchically higher unit are used as additional input variables of the different processes in the cell controller (CC).

**23.** Control device for radio coverage according to one of claims 1-22, **characterised in that** in each case cell controllers (CC) for one or more cells are located in a base station (BS) common to the cells, and raise this base station (BS) to the master base station (master BS), wherein the other base stations (BS) belonging to the cells work as slave base stations (slave BS), so that only a fraction of all locations contain master base stations (master BS).

**24.** Control device for radio coverage according to one of claims 1-23, **characterised in that** only the master base station (master BS) is connected via the cell controller (CC) and via a traditional interface to the hierarchically higher unit.

**25.** Control device for radio coverage according to one of claims 1-24, **characterised in that** the slave base stations (slave BS) are connected to the cell controller (CC) in the master base station (master BS) via an additional interface.

**Revendications**

**1.** Dispositif de commande pour la couverture radio d'un système numérique cellulaire de communication mobile selon un procédé amélioré de couverture de cellules selon lequel chaque cellule est couverte à partir de son bord par plusieurs stations fixes (BS) sur fréquence commune avec le même signal par l'intermédiaire d'antennes à secteurs, étant précisé que les signaux émis sur le support de chaque station fixe sont identiques dans la bande de base, qu'il est prévu entre les stations fixes (BS) et l'unité supérieure hiérarchiquement un régulateur de cellule (CC) qui réalise une optimisation de liaison des différents paramètres de cellule obtenus, en assurant dans la liaison descendante à l'intérieur de la cellule une répartition et une affectation correctes des signaux aux stations fixes correspondantes (BS) de la cellule et en comportant dans la liaison montante une unité centrale (combinaison de diversité) pour combiner les différents signaux utiles des stations fixes (BS) en un signal d'ensemble, et que le régulateur de cellule (CC) contient les nouvelles fonctions, résultant de la couverture multiple de la cellule, pour le traitement des signaux en direction et à partir des stations de base (BS) et en direction et à partir des unités de réseau supérieures hiérarchiquement, et pour la commande des dispositifs radio des stations fixes (BS) individuelles,

**caractérisé en ce que** le régulateur de cellule (CC) règle dynamiquement la puissance d'émission individuelle de chaque station fixe (BS) individuelle qui lui est associée ainsi que la puissance totale émise dans la cellule, en fonction du niveau de réception et de la position d'une station mobile (MS).

**2.** Dispositif de commande pour la couverture radio selon la revendication 1, **caractérisé en ce que** l'unité centrale (combinaison de diversité) ne sélectionne et ne transmet que le meilleur signal de réception de chaque station fixe, déterminé sur la base d'un critère de qualité.

**3.** Dispositif de commande selon la revendication 1, **caractérisé en ce que** l'unité centrale (combinaison de diversité) effectue une pondération et une combinaison linéaires ou non linéaires des signaux reçus par les stations fixes d'une cellule, et transmet ces signaux.

**4.** Dispositif de commande selon la revendication 1, **caractérisé en ce que** l'unité centrale (combinaison de diversité) effectue conjointement l'égalisation, côté réception, pour tous les différents signaux partiels d'une cellule, et combine ceux-ci en un signal d'ensemble.

**5.** Dispositif de commande pour la couverture radio selon l'une des revendications 1 à 4, **caractérisé en ce que** les unités d'émission/réception correspondantes des stations fixes (BS) qui couvrent la cellule sont reliées au régulateur de cellule (CC) par l'intermédiaire d'unités identiques de traitement de signaux d'émission-réception.

**6.** Dispositif de commande pour la couverture radio selon l'une des revendications 1 à 5, **caractérisé en ce que** toute l'unité de traitement de signaux d'émission/réception se trouve à l'endroit de la station fixe (BS).

**7.** Dispositif de commande pour la couverture radio selon l'une des revendications 1 à 5, **caractérisé en ce que** toute l'unité de traitement de signaux d'émission/réception se trouve à l'endroit du régulateur de cellule (CC).

**8.** Dispositif de commande pour la couverture radio selon l'une des revendications 1 à 5, **caractérisé en ce que** les blocs fonctionnels individuels de l'unité de traitement de signaux d'émission/réception (traitement émetteur/récepteur) se trouvent en partie à l'endroit de la station fixe (BS), et en partie à l'endroit du régulateur de cellule (CC).

**9.** Dispositif de commande pour la couverture radio selon l'une des revendications 1 à 8, **caractérisé en ce qu'**il est prévu, entre le régulateur de cellule (CC) et les stations fixes (BS) associées, des dispositifs pour le retard de signal d'émission (TDR) et pour le retard de signal de réception (RDR) qui compensent le temps de propagation des signaux entre le régulateur de cellule (CC) et les stations fixes (BS) associées.

**10.** Dispositif de commande pour la couverture radio selon l'une des revendications 1 à 9, **caractérisé en ce qu'**il est prévu dans la branche d'émission et de réception de chaque station fixe (BS) des dispositifs pour le retard dynamique de signal d'émission (STO) et pour le retard de signal de réception (DRDA), le décalage dans le temps des signaux individuels étant réglé pour qu'on obtienne une interférence propre minimale, un gain d'égalisation maximal ou un compromis avantageux de ces deux caractéristiques.

**11.** Dispositif de commande pour la couverture radio selon l'une des revendications 1 à 10, **caractérisé en ce que** le régulateur de cellule (CC) prévoit un décalage des fréquences porteuses (CFO), de sorte que les fréquences porteuses des stations fixes (BS) d'une cellule qui couvrent la station mobile (MS) se distinguent suivant une valeur définie.

**12.** Dispositif de commande pour la couverture radio selon l'une des revendications 1 à 11, **caractérisé en ce que** l'on calcule dans le régulateur de cellule (CC) le moment d'émission de la station mobile (MS), qui est transmis par chaque station fixe (BS) de manière uniforme à la station mobile (MS).

**13.** Dispositif de commande pour la couverture radio selon l'une des revendications 1 à 12, **caractérisé en ce que** le régulateur de cellule (CC) prévoit une adaptation de signal de signaux correspondants qui sont transmis à l'unité directement supérieure hiérarchiquement, en vue d'un traitement ultérieur, et renvoyés par cette unité.

**14.** Dispositif de commande pour la couverture radio selon l'une des revendications 1 à 13, **caractérisé en ce que** lors d'un premier accès simultané de plusieurs stations mobiles (MS), les accès reconnus corrects sont desservis successivement.

**15.** Dispositif de commande pour la couverture radio selon l'une des revendications 1 à 14, **caractérisé en ce que** lors d'un premier accès simultané de plusieurs stations mobiles (MS), un seul des accès reconnus corrects est choisi et desservi.

**16.** Dispositif de commande pour la couverture radio selon l'une des revendications 1 à 15, **caractérisé en ce que** des grandeurs caractéristiques de la transmission radio qui sont définies par le régulateur de cellule (CC) sont calculées et transmises à l'unité supérieure hiérarchiquement.

**17.** Dispositif de commande pour la couverture radio selon l'une des revendications 1 à 16, **caractérisé en ce que** pour le calcul du transfert, les valeurs de mesure présentes dans le régulateur de cellule sont appliquées sur une série équivalente de valeurs de mesure qui sert de base aux calculs de transfert faits jusque là, de sorte que dans les systèmes existants, il n'y a pas besoin de modifications de l'algorithme de transfert.

**18.** Dispositif de commande pour la couverture radio selon l'une des revendications 1 à 17, **caractérisé en ce que** pour le calcul du transfert, des données supplémentaires sont transmises à l'unité prioritaire, qui influent sur la décision de transfert.

**19.** Dispositif de commande pour la couverture radio selon l'une des revendications 1 à 18, **caractérisé en ce que** les informations de mesure (MMR) de la station mobile sont extraites du signal utile de liaison montante, pendant l'adaptation du signal de réception.

**20.** Dispositif de commande pour la couverture radio selon l'une des revendications 1 à 19, **caractérisé en ce que** les informations de mesure (MMR) de la station mobile sont extraites dans une unité supérieure hiérarchiquement et sont renvoyées au régulateur de cellule (CC).

**21.** Dispositif de commande pour la couverture radio selon l'une des revendications 1 à 20, **caractérisé en ce que** les signaux de commande (NCS1) de l'unité supérieure hiérarchiquement sont transmis directement aux unités de traitement de signaux de réception/émission (traitement émetteur/récepteur).

**22.** Dispositif de commande pour la couverture radio selon l'une des revendications 1 à 21, **caractérisé en ce que** les signaux de commande (NCS2) de l'unité supérieure hiérarchiquement sont utilisés comme grandeurs d'entrée supplémentaires des différents traitements dans le régulateur de cellule (CC).

**23.** Dispositif de commande pour la couverture radio selon l'une des revendications 1 à 22, **caractérisé en ce que** des régulateurs de cellule (CC) pour une ou plusieurs cellules se trouvent dans une station fixe (BS) commune aux cellules, et élèvent cette station fixe (BS) au rang de station fixe maîtresse (master BS), les autres stations fixes (BS) associées aux cellules fonctionnant comme des stations fixes asservies (slave BS), de sorte qu'une fraction seulement de tous les emplacements contiennent des stations fixes maîtresses.

**24.** Dispositif de commande pour la couverture radio selon l'une des revendications 1 à 23, **caractérisé en ce que** seule la station fixe maîtresse (master BS) est reliée à la l'unité supérieure hiérarchiquement par l'intermédiaire du régulateur de cellule (CC) et d'une interface classique.

**25.** Dispositif de commande pour la couverture radio selon l'une des revendications 1 à 24, **caractérisé en ce que** les stations fixes asservies (slave BS) communiquent avec le régulateur de cellule (CC) dans la station fixe maîtresse (master BS) par l'intermédiaire d'une interface supplémentaire.

**REFERENCE CONFIGURATION**

*Interfaces and vocabulary*
(1) info + parity bits
(2) coded bits
(3) interleaved bits
(4) encrypted bits
(5) modulating bits
(6) information bits (receive)

*FIG. 1*

Mehrfachversorgung einer Mobilstation MS durch drei Feststationen BS₁......BS₃

FIG 2

**FIG 3**

Nutzsignal  Netzwerkseitige Regelungs-
und Überwachungsprozesse

Zellcontroller CC

FIG 4

Nutzsignal

Steuerung

Tx/Rx-
Processing

T R U

17

EP 0 737 408 B1

FIG 5

18

○ Master-BS mit Anschluß an höher liegende Einheit

○ Slave-BS

—— Übertragungsstrecken zwischen Master-BS u. Slave-BS

FIG 6